Europäisches Patentamt

European Patent Office

Office européen des brevets

(11) Numéro de publication: **0 256 937 B1**

## (12) FASCICULE DE BREVET EUROPEEN

(45) Date de publication de fascicule du brevet:
23.10.91

(51) Int. Cl.⁵: **H02P 7/00, G05B 19/10**

(21) Numéro de dépôt: 87401840.1

(22) Date de dépôt: 07.08.87

(54) **Dispositif de réglage et de dialogue notamment pour variateur de vitesse.**

(30) Priorité: 14.08.86 FR 8611739

(43) Date de publication de la demande:
24.02.88 Bulletin 88/08

(45) Mention de la délivrance du brevet:
23.10.91 Bulletin 91/43

(84) Etats contractants désignés:
AT BE CH DE ES GB IT LI NL SE

(56) Documents cités:
DE-A- 2 042 717    DE-A- 2 162 768
DE-A- 3 236 944    DE-B- 2 902 604
GB-A- 2 117 928    US-A- 4 434 390

IEEE 1985 TEXTILE INDUSTRY, 1985, IEEE; J.
WEBB: "Microprocessor use in AC and DC
drives"

Idem

Idem

(73) Titulaire: **TELEMECANIQUE**
**43-45, Boulevard Franklin Roosevelt**
**F-92504 Rueil-Malmaison Cedex(FR)**

(72) Inventeur: **Conrath, Christian**
**28, rue Geneviève Couturier**
**F-92500 Rueil Malmaison(FR)**

(74) Mandataire: **Marquer, Francis et al**
**Cabinet Moutard 35, Avenue Victor Hugo**
**F-78960 Voisins le Bretonneux(FR)**

Rank Xerox (UK) Business Services

## Description

La présente invention concerne un dispositif de réglage et de dialogue pour appareil électronique de commande de puissance tel qu'un variateur de vitesse.

Les variateurs électroniques de vitesse sont couramment utilisés en association avec des moteurs à courant continu ou à courant alternatif pour entraîner ces moteurs à vitesse variable.

Il est connu d'utiliser sur un variateur de vitesse un afficheur ou bien une ou plusieurs diodes photoémettrices permettant de visualiser, par exemple, un état de marche et un état de défaut du variateur. Cependant, cette visualisation est limitée et ne permet pas à l'opérateur d'entreprendre un dialogue ni d'effectuer un réglage continu de paramètres étroitment liés au fonctionnement du variateur.

Il est en effet souhaitable de pouvoir procéder facilement au réglage continu de paramètres tels que les rampes d'accélération et de décélération, les butées de vitesse haute et basse, la loi tension/fréquence dans le cas d'un convertisseur de fréquence, etc... et de visualiser les valeurs de ces paramètres.

On peut songer utiliser à cet effet un terminal de dialogue, mais celui-ci nécessite une connexion spécifique et constitue un appareil complémentaire distinct du variateur de vitesse (voir per exemple "IEEE 1985, TEXTILE INDUSTRY; J WEBB: Microprocessor use in AC and DC drives.") L'invention a en particulier pour but de permettre un réglage des principaux paramètres de fonctionnement d'un appareil électronique de commande de puissance tel qu'un variateur de vitesse, à l'aide de moyens simples, intégrés au variateur et aisément accessibles, tout en interdisant les manoeuvres qui conduiraient à des déréglages intempestifs.

Elle a pour autre but de faciliter le dialogue avec l'opérateur et de faire bénéficier ce dernier des moyens d'affichage utilisés pour le réglage en vue d'examiner d'autres données d'exploitation non réglables ou de constater des défauts de fonctionnement du variateur de vitesse.

Un tel problème est résolu par le caractéristiques de le revendication 1.

L'intervention de l'opérateur pour régler les paramètres considérés est donc possible et ne nécessite pas d'appareil supplémentaire puisque le support est intégré au variateur.

De préférence, le bouton d'avance est accessible et l'afficheur lisible lorsque la partie amovible de l'enveloppe est fermée, de sorte que l'opérateur peut faire défiler les codes et les valeurs des divers paramètres pour en effectuer la lecture sans pouvoir procéder au réglage ; les moyens de réglage et d'autres commutateurs agissant sur le fonctionnement, le dialogue ou l'autotest du variateur sont occultés quand la partie amovible de l'enveloppe est fermée. La séquence d'affichage des paramètres non réglables précède ou suit la séquence d'affichage des paramètres réglables,

Les moyens de traitement peuvent comprendre un moyen de scrutation séquentielle des entrées reliées aux moyens de réglage tels que des potentiomètres ou des moyens logiciels associées à une mémoire morte en fonction de l'actionnement ou des actionnements successifs du bouton d'avance, et des moyens de mémorisation et de commande d'affichage aptes à déterminer en réponse à l'actionnement ou à chaque actionnement du bouton la visualisation sur l'afficheur d'un code représentatif du paramètre scruté et la valeur de ce paramètre.

Les moyens de traitement sont de préférence agencés pour produire sur l'afficheur une visualisation des codes représentatifs d'états ou de paramètres non réglables et une visualisation prioritaire de défauts de fonctionnement (à l'aide de moyens d'interruption appropriés), voire de défauts fonctionnels organiques suite à une procédure volontaire d'autotest. Les moyens de traitement peuvent être agencés pour déterminer à chaque actionnement du bouton la visualisation du code de paramètre puis la valeur de ce paramètre.

D'autres avantages et particularités de l'invention apparaîtront à la lecture de la description qui suit d'un mode de réalisation, en regard des figures annexées.

La figure 1 représente schématiquement en élévation de face un variateur de vitesse muni du dispositif conforme à l'invention ;

La figure 2 montre partiellement la coupe II-II de la figure 1 ;

La figure 3 montre à plus grande échelle la plage A du circuit imprimé de commande du variateur de vitesse de la figure 1 ;

La figure 4 est un schéma synoptique du variateur de vitesse ;

La figure 5 représente une partie d'une séquence de réglage ; et

La figure 6 montre l'ordre d'affichage des codes d'exploitation.

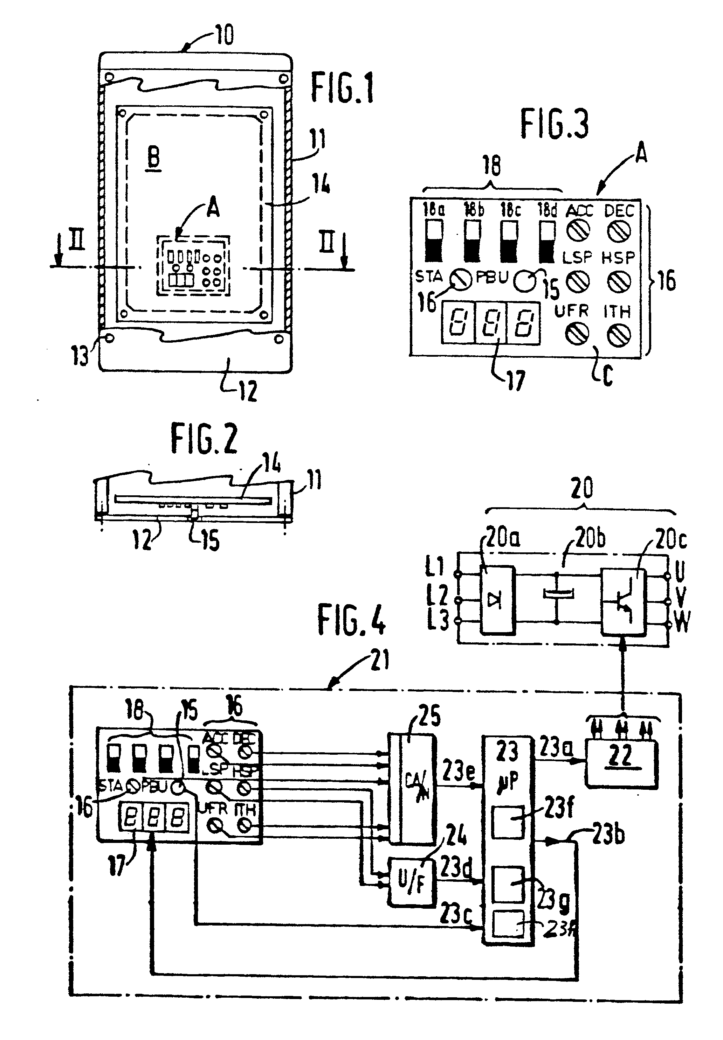

Le variateur de vitesse représenté est un convertisseur de fréquence associable à un moteur asynchrone. Le variateur de vitesse 10 présente (figure 1) une enveloppe extérieure 11 dotée en face avant d'un capot amovible 12. Le capot 12 est, par exemple, fixé à l'enveloppe 11 au moyen de vis 13.

Un circuit imprimé de commande 14 est disposé dans l'enveloppe parallèlement au capot 12 et présente, d'une part, une plage A formant le support fixe du dispositif de réglage et de dialogue selon l'invention, d'autre part, une plage B entourant A.

La plage B sert de support aux autres composants du circuit de commande.

La plage de réglage et de dialogue A comporte (figure 3) une bouton 15 d'avance ou autre élément manuel d'actionnement permettant à l'opérateur d'examiner séquentiellement les valeurs des paramètres d'exploitation notés : ACC, DEC, LSP, HSP, UFR, ITH et STA et un afficheur 17 alphanumérique par exemple composé de trois cellules de sept segments. La plage A comprend en outre quatre commutateurs 18a-d. La fonction des potentiomètres 16 et des commutateurs 18 sera expliquée plus loin. La plage A est protégée des contacts directs par une plaque isolante C fixée au circuit imprimé 14 et convenablement ajourée pour laisser apparents ou traversants les éléments 15-18.

Le bouton d'avance 15 est accessible de l'avant du variateur de vitesse même lorsque le capot 12 est fixé à l'enveloppe 11 (figure 2). L'afficheur 17 est alors visible à travers une fenêtre transparente prévue dans le capot 12.

Les éléments 16, 18 ne peuvent par contre être manipulés qu'après ouverture ou retrait du capot 12. Il va de soi qu'à la place de celui-ci on pourrait prévoir une porte ou un couvercle amovible.

Le variateur de vitesse 10 comprend (figure 4) une partie puissance 20 et une partie de commande 21, cette dernière étant portée par le circuit imprimé 14.

La partie puissance 20 présente un redresseur 20a relié à des conducteurs du réseau L1, L2, L3, un circuit intermédiaire de tension continue 20b et un onduleur 20c dont les sorties U, V, W peuvent être reliées aux enroulements du moteur asynchrone. L'onduleur 20c est un pont à six transistors dont les bases sont commandées par un circuit de commande 22 inclus dans la partie 21. L'état bloqué ou passant des transistors est déterminé par le circuit 22 en fonction de l'état de sorties 23a d'un microprocesseur 23, dont d'autres sorties 23b son reliées à l'afficheur 17 du dispositif de réglage et de dialogue.

L'interrupteur commandé par le bouton d'avance 15 est relié à une entrée 23c du microprocesseur ; les potentiomètres 16 de réglage de vitesse basse LSP et de vitesse haute HSP sont reliés aux entrées d'un convertisseur tension-fréquence 24 dont la sortie est reliée à une entrée 23d du microprocesseur ; les potentiomètres 16 de réglage d'accélération ACC, de décélération DEC, de loi tension/fréquence UFR, de protection thermique du moteur ITH et de stabilité STA sont reliés aux entrées d'un convertisseur analogique-numérique 25 dont les sorties sont reliées à des entrées 23e du microprocesseur.

Le commutateur 18a permet de sélectionner l'entrée de consigne de vitesse, par exemple pour un capteur 0-20 mA dans une position et un capteur 4-20 mA dans l'autre position.

Les commutateurs 18b et 18c permettent de sélectionner respectivement la plage de fréquence de fonctionnement et la loi tension/fréquence.

Le commutateur 18d permet de sélectionner le fontionnement normal ou le fonctionnement en autotest.

Un cavalier de sélection de la fréquence de sortie à la tension nominale est par ailleurs prévu sur le circuit imprimé 14.

Au microprocesseur 23 sont associés des moyens matériels et logiciels de traitement comprenant un moyen de scrutation séquentielle des entrées 23d, 23e en fonction des actionnements successifs du bouton d'avance 15, ainsi que des moyens de mémorisation et de commande d'affichage apte à déterminer en fonction de l'action exercée sur le bouton d'avance l'affichage alphanumérique en 17 d'un code représentatif du paramètre scruté, puis la valeur de ce paramètre.

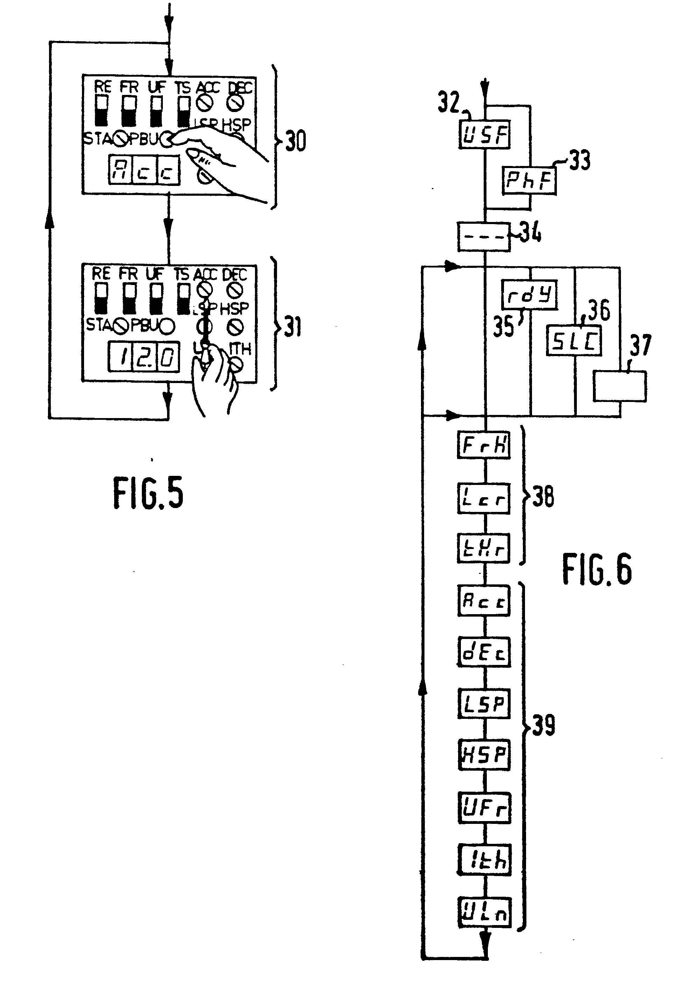

On constate ainsi (figure 5) que chaque opération d'affichage initiée par une pression sur le bouton-poussoir d'avance 15 comporte une phase 30 de durée 0,5 à 1 seconde par exemple consistant en la visualisation d'un code du paramètre scruté ; il s'agit ici du code "ACC" de rampe d'accélération ; puis une phase 31 consistant en l'affichage de la valeur du paramètre dans l'unité qui lui est propre. L'opérateur effectue le réglage souhaité en faisant tourner le potentiomètre 16 référencé ACC à l'aide d'un tournevis.

Il est important de noter que, d'une part, le réglage s'effectue pendant la marche du variateur, d'autre part, la valeur affichée évolue pendant le réglage, de sorte que l'opérateur peut immédiatement contrôler et affiner son réglage.

Le fonctionnement du dispositif de l'invention va maintenant être décrit en regard de l'organigramme de la figure 6 qui montre les affichages successifs des codes d'exploitation et de défaut à partir d'une mise sous tension du variateur.

Tant que le réseau est trop faible ou en cas de sous-tension passagère, ou observe l'affichage en 17 du code 32 USF ; s'il y a absence de phase ou coupure fugitive du réseau, on observe l'affichage du code 33 PHF. Puis le code 34 indique la phase de charge des condensateurs et le code 35 RDY apparait pour déclarer le variateur prêt à fonctionner. Si le variateur est couplé à un automate programmable au moyen d'un coupleur de communication série, on observe le code 36 SLC. Le code d'un défaut éventuel de fonctionnement peut apparaître en 37. Il convient de noter que les moyens de traitement comprennent des moyens d'interruption 23h qui rendent prioritaire l'affichage du défaut de fonctionnement (par exemple surintensité, surchauffe variateur, surchage moteur, etc...) par rapport à l'affichage des paramètres de fonctionnement et qui provoquent l'arrêt du variateur.

Lorsque l'opérateur presse le bouton 15, il fait apparaître à chaque pression un nouveau code de paramètre d'exploitation suivi de la valeur de ce paramètre.

Les premiers paramètres de codes 38 sont des paramètres non réglables à l'aide des potentiomètres :

FRH : consigne de fréquence en hertz, établie par un organe extérieur,

LCR : courant moteur en ampères,

THR : état thermique du moteur en % de l'échauffement nominal du moteur.

Les paramètres suivants de codes 39 sont des paramètres réglables à l'aide des potentiomètres :

ACC : rampe d'accélération en secondes,

DEC : rampe de décélération en secondes,

LSP : borne inférieure de vitesse en hertz,

HSP : borne supérieure de vitesse en hertz,

UFR : loi tension/fréquence linéaire ou non,

ITH : courant thermique en ampères,

ULH : tension ligne en volts efficaces.

Une pression continue sur le bouton 15 provoque le défilement cyclique des codes 35-39 ; le relâchement du bouton 15 produit l'affichage de la valeur du dernier paramètre dont le code a défilé.

L'opérateur qui veut entreprendre une procédure de diagnostic agit sur le commutateur d'autotest 18d et déclenche ainsi une séquence logicielle de diagnostic qui permet de visualiser sur l'afficheur 17 un éventuel défaut organique tel que défaut sur carte de contrôle, sur carte de puissance, sur module de puissance, etc...

Dans un mode de réalisation plus coûteux, on peut prévoir une visualisation simultanée du code 38, 39 du paramètre d'exploitation et de la valeur du paramètre sur des parties d'afficheur distinctes. Dans un autre mode de réalisation, on peut prévoir un bouton d'avance pour faire défiler les codes ou les valeurs des paramètres, un bouton de recul pour décrémenter lesdites valeurs et un bouton sélecteur pour choisir le mode de défilement des codes ou le mode de réglage de leurs valeurs.

L'invention s'applique à d'autres appareils électroniques de commande de puissance, notamment à des gradateurs.

## Revendications

1. Dispositif de réglage et de dialogue pour variateur de vitesse comprenant un boîtier (11) présentant, en face avant, un orifice refermé par une partie amovible (12) susceptible d'être ouverte par l'opérateur et une carte de circuit imprimé (14) logée dans le boîtier (11), incluant des circuits de commande du variateur de vitesse munis de moyens de règlage (16) des paramètres de fonctionnement du variateur, caractérisé en ce qu'il comprend, monté sur ladite carte (14), un afficheur alphanumérique (17) susceptible de visualiser les valeurs effectives des susdits paramètres et au moins un bouton d'avance (15) permettant à l'opérateur de changer, en effectuant une pression, le paramètre visualisé sur l'afficheur (17) par un paramètre suivant, selon une séquence préétablie, ledit afficheur (17), lesdits moyens de règlage et ledit bouton étant situés dans une zone (A) de la carte de circuit imprimé visible et accessible depuis l'extérieur par l'orifice du boîtier, après ouverture de la partie amovible (12), et un processeur (23) présentant des entrées (23c, 23d, 23e) reliées, d'une part au bouton d'avance (15) et, d'autre part aux moyens de règlage (16) par l'intermédiaire d'au moins un convertisseur analogique-numérique (25, 24), des sorties (23b) reliées à l'afficheur (17), et des moyens de traitement comprenant des moyens de scrutation sequentielle (23f) des entrées (23d, 23e) reliées aux moyens de règlage (16), en fonction de l'actionnement du bouton d'avance (15) et des moyens de mémorisation et de commande d'affichage (23g) aptes à déterminer, en réponse à l'actionnement du bouton 15, l'affichage sur l'afficheur (17) d'un code (39) représentatif du paramètre scruté et de la valeur de ce paramètre.

2. Dispositif selon la revendication 1, caractérisé en ce que, lorsque la partie amovible (12) est fermée, le bouton d'avance (15) est accessible, l'afficheur (17) est lisible, tandis que les moyens de règlage sont occultés par ladite partie amovible (12).

3. Dispositif selon la revendication 1 ou 2, caractérisé en ce que les moyens de traitement associés au processeur sont agencés pour produire sur l'afficheur (17) une visualisation de codes alphanumériques (38) représentatifs d'états non règlables de fonctionnement du variateur de vitesse et/ou de valeur de ces états, cette visualisation s'effectuant en séquence avec la visualisation des codes et des valeurs des paramètres règlables et/ou des codes (39) qui leur sont associés.

4. Dispositif selon l'une des revendications 1 à 3, caractérisé en ce que les moyens de traitement associés au processeur sont agencés pour produire sur l'afficheur une visualisation prioritaire de codes de défauts (32, 33, 37) affectant le fonctionnement en cours du variateur de vitesse.

5. Dispositif selon l'une des revendications 1 à 4, caractérisé en ce que les moyens de traitement associés au processeur sont agencés pour déterminer une séquence d'autotest du variateur de vitesse, en réponse à la manipulation d'un commutateur d'autotest (18d) prévu sur le support (A), et pour produire sur l'afficheur (17) une visualisation de codes alphanumériques représentatifs de défauts fonctionnels organiques du variateur de vitesse, le commutateur d'autotest étant occulté par la partie amovible (12) de l'enveloppe lorsque celle-ci est fermée.

6. Dispositif selon l'une des revendications 1 à 5, caractérisé en ce qu'un commutateur de plage de fréquence (18b) et un commutateur de loi tension/fréquence (18c) sont disposés sur le support (A), le commutateur (18b, 18c) étant occulté par la partie amovible (12) de l'enveloppe lorsque celle-ci est fermée.

**Claims**

1. An adjusting and dialogue device for speed variators comprising a case (11) having on its front face an orifice closed by a removable part (12) which can be opened by the operator and a printed circuit card (14) located in the case (11), including control circuits of the speed variator provided with adjusting means (16) for the operating parameters of the variator, characterized in that it comprises, mounted on said card (14) an alphanumeric display device (17) for displaying the effective values of said parameters and at least an advance knob (15) enabling the operator to change, by exerting a pressure, the parameter displayed on the display device (17) by a following parameter, according to a predetermined sequence, said display device (17), said adjusting means and said knob being located in a zone (A) of the printed circuit card which can be seen and which is accessible from the outside through the orifice of the case, after opening of the removable part (12) and a processor (23) having inputs (23c, 23d, 23e) connected, on the one hand, to the advance knob (15) and, on the other hand, to the adjusting means (16) through at least one A-D converter (25, 24), outputs (23b) connected to the display device (17), and processing means comprising means (23f) for sequentially scrutinizing inputs (23d, 23e) connected to the adjusting means (16), as a function of the operation of the advance knob (15), and storage and display control means (23g) adapted to determine, in response to the operation of the knob (15), display on the display unit (17) of a code (39) representative of the scrutinized parameter and of the value of this parameter.

2. Device according to claim 1, characterized in that, when the removable part (12) is closed, the advance knob (15) is accessible, the display unit (17) can be read, whereas the adjusting means are occulted by said removable part (12).

3. Device according to claim 1 or 2, characterized in that the processing means associated with the processor are arranged for displaying on the display unit (17) the alphanumeric codes (38) representative of non adjustable operating states of the speed variator and/or of the value of these states, this display being carried out in sequence with the display of the codes and of the values of the adjustable parameters and/or of the codes (39) which are associated therewith.

4. Device according to one of the claims 1 to 3, characterized in that the processing means associated with the processor are arranged for causing priority display on the display unit of defect codes (32, 33, 37) affecting the current operation of the speed variator.

5. Device according to one of the claims 1 to 4, characterized in that the processing means associated with the processor are arranged for determining a self-test sequence of the speed variator, in reply to the switching of a self-test switch (18d) provided on the support (A), and for displaying on the display unit (17) alphanumeric codes representative of hardware operating defects of the speed variator, the self-test switch being occulted by the removable part (12) of the casing when this latter is closed.

6. Device according to one of the claims 1 to 5, characterized in that a frequency range switch (18b) and a voltage/frequency law switch (18c) are arranged on the support (A), the switch (18b, 18c) being occulted by the removable part (12) of the casing when the latter is closed.

**Patentansprüche**

1. Regel-und Dialogvorrichtung für einen Regelantrieb, mit einem Gehäuse (11), das auf der Vorderseite eine Öffnung aufweist, welche durch ein abnehmbares Teil (12) verschlossen werden kann, das von der Bedienungsperson geöffnet werden kann, und einer gedruckten, im Gehäuse (11) untergebrachten, Leiterkarte (14), welche die Steuerkreise für den Regelantrieb enthält, die mit Mitteln (16) zur Steuerung der Betriebsparameter des Regelantriebs versehen sind, dadurch gekennzeichnet, dass sie auf auf besagter Karte (14) ein alphanumerisches Anzeigeorgan (17) aufweist, welches die tatsächlichen Werte besagter Parameter anzeigen kann, und mindestens eine Vorrücktaste (15), die es der Bedienungsperson ermöglicht, durch einen Druck den auf dem Anzeigeorgan (17) angezeigten Parameter gegen den gemäss einer vorbestimmten Abfolge nächsten Parameter zu ersetzen, wobei besagtes Anzeigeorgan (17), besagte Regelmittel und besagte Taste in einem Bereich (A) der gedruckten Leiterkarte angeordnet sind, der von aussen durch die Gehäuseöffnung nach Öffnung des abnehmbaren Teils (12) sichtbar und zugänglich ist, und einem Prozessor (23), mit Eingängen (23c, 23d, 23e), die einerseits an die Vorrücktaste (15) und andererseits an die Regelmittel (16) angeschlossen sind, durch mindestens einen Analog-Digital-Umsetzer (25, 24), an das Anzeigeorgan (17) angeschlossenen Ausgängen (23b) und Verarbeitungsmitteln, mit Mitteln (23f) zur sequentiellen Abfrage, jeweils nach Betätigung der Vorrücktaste, der an die Regelmittel (16) angeschlossenen Eingänge (23d, 23e), sowie Speicher- und Anzeigesteuermitteln (23g), die, auf die Betätigung der Taste (15) hin, die Anzeige auf dem Anzeigeorgan (17) eines für den abgefragten Parameter und dessen Wert typischen Codes (39) bestimmen.

2. Vorrichtung nach Anspruch 1, dadurch gekennzeichnet, dass, wenn der abnehmbare Teil (12) geschlossen ist, die Vorrücktaste (l5) zugänglich und das Anzeigeorgan (17) ablesbar ist, während die Regelmittel durch besagtes abnehmbares Teil (12) verborgen sind.

3. Vorrichtung nach Anspruch 1 oder 2, dadurch gekennzeichnet,dass die dem Prozessor zugeordneten Verarbeitungsmittel so ausgelegt sind, dass auf dem Anzeigeorgan (17) alphanumerische Codes (38) angezeigt werden, die typisch sind für nicht regelbare Betriebsweisen der Regelvorrichtung und/oder die Werte der besagten Betriebsweisen und besagte Anzeige sequentiell mit der Anzeige der Codes und Werte der regelbaren Parameter und/oder den diesen zugeordneten Codes (39) erfolgt.

4. Vorrichtung nach einem der Ansprüche 1 bis 3, dadurch gekennzeichnet, dass die dem Prozessor zugeordneten Verarbeitungsmittel so ausgelegt sind, dass auf dem Anzeigeorgan vorrangig die Codes (32, 33, 37) für Betriebsstörungen des Regelantriebs angezeigt werden.

5. Vorrichtung nach einem der Ansprüche 1 bis 4, dadurch gekennzeichnet, dass die dem Prozessor zugeordneten Verarbeitungsmittel so ausgelegt sind, dass sie bei Betätigung eines auf dem Träger (A) vorgesehenen Schalters (l8d) eine Selbsttestsequenz des Regelantriebs veranlassen und auf dem Anzeigeorgan (17) die für organische Betriebsstörungen des Regelantriebs typischen alphanumerischen Codes sichtbar machen, wobei der Selbsttestschalter vom abnehmbaren Teil (12) des Gehäuses bedeckt ist, wenn dieses Teil geschlossen ist.

6. Vorrichtung nach einem der Ansprüche 1 bis 5, dadurch gekennzeichnet, dass auf dem Träger (A) ein Frequenzbereichsschalter (18b) und ein Spannungs/Frequenzgesetzschalter (18c) angeordnet sind und der Schalter (18b, 18c) vom abnehmbaren Teil (12) des Gehäuses verborgen wird, wenn dieses Teil geschlossen ist.

FIG.1

FIG.3

FIG.2

FIG.4

FIG.5

FIG.6